# EUROPÄISCHE PATENTSCHRIFT

(11) **EP 3 242 060 B1**
(45) Veröffentlichungstag und Bekanntmachung des Hinweises auf die Patenterteilung: **17.06.2020**
(21) Anmeldenummer: 17167963.2
(22) Anmeldetag: 25.04.2017
(51) Int. Cl.: F16J 15/06, F16J 15/10, F16J 15/12, F16L 23/18, F16L 23/22

(54) **FLANSCHDICHTUNG UND DICHTUNGSANORDNUNG, DIE EINE SOLCHE FLANSCHDICHTUNG UMFASST**
FLANGE SEAL AND SEAL ARRANGEMENT COMPRISING SUCH A FLANGE SEAL
JOINT À COLLERETTE ET AGENCEMENT D'ÉTANCHÉITÉ COMPRENANT UN TEL JOINT

(30) Priorität: 04.05.2016 DE 102016005385
(43) Veröffentlichungstag der Anmeldung: 08.11.2017
(73) Patentinhaber: Carl Freudenberg KG, 69469 Weinheim (DE)
(72) Erfinder: Nahrwold, Olaf, 67071 Ludwigshafen (DE); Geubert, Christian, 64625 Bensheim (DE); Menzenhauer, Frank, 44227 Dortmund (DE); Kritzer, Peter, Dr., 67147 Forst (DE); Lauer, Frank, 69231 Rauenberg (DE)

(56) Entgegenhaltungen:
- WO-A1-01/14779
- US-A- 3 355 181
- US-A- 4 026 565

## Beschreibung

### Technisches Gebiet

Die Erfindung betrifft eine Flanschdichtung und eine Dichtungsanordnung, die eine solche Flanschdichtung umfasst.

Die Flanschdichtung umfasst einen Stützkörper aus einem zähharten Werkstoff und ein Dichtelement aus einem gummielastischen Werkstoff, die einstückig miteinander verbunden sind, wobei das Dichtelement eine von einem abzudichtenden Medium in einem abzudichtenden Raum beaufschlagbare Dichtkante aufweist, wobei das Dichtelement im Bereich der Dichtkante im herstellungsbedingten Zustand Hohlräume aufweist, die während der bestimmungsgemäßen Verwendung der Flanschdichtung volumenveränderlich sind.

Die Dichtungsanordnung umfasst eine solche Flanschdichtung und zwei Flansche, wobei die Flanschdichtung in axialer Richtung dichtend zwischen den Flanschen angeordnet ist.

### Stand der Technik

Aus der US 3,355,181 ist eine Flanschdichtung bekannt, die einen Stützkörper und ein Dichtelement aus einem gummielastischen Werkstoff umfasst, die miteinander verbunden sind. Das Dichtelement weist im herstellungsbedingten Zustand Hohlräume auf, die während der bestimmungsgemäßen Verwendung der Flanschdichtung volumenveränderlich sind. Das Dichtelement besteht aus einem geschlossenzelligen elastomeren Werkstoff, der kompressibel ist. Durch die Kompressibilität passt sich das Dichtelement besonders gut an seine jeweilige Einbausituation an. Die volumenveränderlichen Hohlräume sind in Größe und Form sowie in ihrer Verteilung im Dichtelement an die jeweiligen Gegebenheiten des Anwendungsfalles angepasst.

Aus der WO 01/14779 A1 ist eine Flanschdichtung bekannt, die einen Stützkörper und ein Dichtelement umfasst, die miteinander verbunden sind, wobei das Dichtelement eine von einem abzudichtenden Medium in einem abzudichtenden Raum beaufschlagbare Dichtkante aufweist und wobei das Dichtelement im herstellungsbedingten Zustand Hohlräume aufweist, die während der bestimmungsgemäßen Verwendung der Flanschdichtung volumenveränderlich sind.

Aus der US 4,026,565 ist eine Flanschdichtung bekannt, die ein Dichtelement aus einem gummielastischen Werkstoff umfasst. Benachbart zum Dichtelement ist ein Kompressions-Begrenzungselement angeordnet, das mit dem Dichtelement verbunden oder von diesem vollständig umschlossen ist. Das Kompressions-Begrenzungselement ist im Wesentlichen schnurförmig ausgebildet und hat einen trapezförmigen Querschnitt.

Eine weitere Flanschdichtung und eine solche Dichtungsanordnung sind jeweils aus der DIN 32676 bekannt.

Die Dichtungsanordnung umfasst zwei koaxial und axial benachbart zueinander angeordnete Flansche, die durch eine in axialer Richtung geklemmte Flanschdichtung dichtend miteinander verbunden sind.
Die Flansche und die Flanschdichtung bilden gemeinsam eine rohrförmige Leitung, die von einem abzudichtenden Medium durchströmbar ist.
Die Flansche weisen auf ihren einander zugewandten Seiten jeweils eine Nut auf, wobei in den Nuten Verdickungen des Dichtelements der Flanschdichtung dichtend angeordnet sind.
Die Flanschdichtung weist radial innenseitig eine Dichtkante auf, deren Innendurchmesser dem Durchmesser der rohrförmigen Leitung entspricht.

Aus der EP 2 334 959 B1 ist eine Flanschdichtung zur Abdichtung eines hygienischen Rohrs bekannt.
Die Flanschdichtung umfasst einen ringförmigen Stützkörper mit einem Innenumfang und einem Außenumfang sowie zwei Stirnseiten, die zumindest teilweise vom elastomeren Werkstoff des Dichtelements überdeckt sind. Nicht überdeckt sind nur die stirnseitig beiderseits angeordneten, axialen Endanschläge, die jeweils einen Bestandteil des Stützkörpers bilden.
Der Stützkörper hat einen Innendurchmesser, der minimal größer als der Innendurchmesser der Flansche ist, wobei der Stützkörper, im Querschnitt der Dichtungsanordnung betrachtet, innenumfangsseitig vom gummielastischen Werkstoff des Dichtelements im Wesentlichen U-förmig umschlossen ist.
Im montierten Zustand der Flanschdichtung hat diese einen Innendurchmesser, der dem Innendurchmesser der Flansche entspricht.

Im zuvor beschriebenen Stand der Technik würde eine thermische Ausdehnung und/oder Quellung dazu führen, dass sich der gummielastische Werkstoff, aus dem das Dichtelement besteht, radial nach innen ausdehnt/ aufquillt, durchaus in radialer Richtung auch soweit, dass das Dichtelement mit seiner Dichtkante radial nach innen in den Hohlraum hinein ragt, der von den Flanschen begrenzt ist. Dadurch wird der Strömungsquerschnitt für das abzudichtende Medium durch die Flansche unerwünscht verengt und es kann zu unterwünschten Verwirbelungen des abzudichtenden Mediums kommen.
Außerdem ist von Nachteil, dass die Dichtkante zum Beispiel bei Reinigung der Flansche abgescherrt werden kann, es dadurch zu einer Freisetzung mechanischer Partikel kommen kann und die Dichtkante, durch eine solche Beschädigung, nicht mehr zuverlässig abdichtet.

### Darstellung der Erfindung

Der Erfindung liegt die Aufgabe zugrunde, eine Flanschdichtung und eine Dichtungsanordnung mit der Flanschdichtung zu zeigen, die einen Stützkörper mit einem insgesamt nur kleinen Volumen aufweist, um bedarfsweise mehr Volumen für eine Wärmeausdehnung und/oder Quellung des gummielastischen Werkstoffs des Dichtelements zur Verfügung zu stellen, wobei die Stützkörper eine hohe Stabilität aufweisen und eine gleichmäßige Ableitung der eingeleiteten Kräfte in alle Richtungen ermöglichen sollen. Insbesondere soll der Durchmesser der Dichtkante unter allen Betriebsbedingungen - wenn überhaupt - nur sehr geringfügig kleiner als der Innendurchmesser der abzudichtenden Flansche sein.

Diese Aufgabe wird erfindungsgemäß durch einen Flanschdichtung gemäß Anspruch 1 und eine Dichtungsanordnung gemäß Anspruch 10 gelöst.
Auf vorteilhafte Ausgestaltungen der Flanschdichtung nehmen die auf Anspruch 1 direkt oder indirekt rückbezogenen Ansprüche Bezug.

Zur Lösung der Aufgabe ist es vorgesehen, dass der Stützkörper, in seiner Umfangsrichtung betrachtet, perlenkettenförmig ausgebildet ist und dass die Perlen des perlenkettenförmigen Stützkörpers, im Querschnitt betrachtet, kreisförmig ausgebildet sind.

Der Stützkörper ist, in seiner Umfangsrichtung betrachtet, perlenkettenförmig ausgebildet. Derart gestaltete Stützkörper haben den Vorteil, dass sie insgesamt nur ein vergleichsweise kleines Volumen in der Flanschdichtung beanspruchen und dadurch noch genug Volumen zur Verfügung steht, um Wärmeausdehnung und/oder Quellung des gummielastischen Werkstoffs des Dichtelements auszugleichen.

Die Perlen sind, im Querschnitt betrachtet, kreisförmig ausgebildet.
Bei im Querschnitt kreisförmigen Perlen ist von Vorteil, dass bei immer größer werdender Verpressung auch die Auflagefläche der dann abgeplatteten Perlen immer größer wird. Außerdem weist die Kugelform der Perlen eine sehr hohe Stabilität auf und ermöglicht eine gleichmäßige Ableitung der eingeleiteten Kräfte in alle Richtungen.

Bei im Querschnitt betrachtet trapezförmigen Perlen werden die eingeleiteten Kräfte nur seitlich abgeleitet.

Während der bestimmungsgemäßen Verwendung ist eine Flanschdichtung üblicherweise unterschiedlichen Temperaturen ausgesetzt und gelangt mit unterschiedlichen abzudichtenden Medien in Kontakt. Die Beaufschlagung mit unterschiedlichen Temperaturen und/oder unterschiedlichen abzudichtenden Medien kann während der bestimmungsgemäßen Verwendung der Flanschdichtung zu einer thermischen Ausdehnung des Dichtelements und/oder zu einer Quellung des Werkstoffs führen, aus dem das Dichtelement besteht.

Um die zuvor genannten Nachteile zu vermeiden, sind die Hohlräume im Bereich der Dichtkante vorgesehen, die während der bestimmungsgemäßen Verwendung der Flanschdichtung volumenveränderlich sind.
Üblicherweise wird bei der Herstellung von Gummiteilen sehr sorgfältig darauf geachtet, dass diese keinerlei, normalerweise nachteilige Hohlräume aufweisen.
Erfindungsgemäß ist festgestellt worden, dass volumenveränderliche Hohlräume im Zusammenhang mit Flanschdichtungen jedoch zu vorteilhaften Gebrauchseigenschaften der Flanschdichtung führen, weil durch diese Hohlräume thermische Ausdehnungen des gummielastischen Werkstoffs des Dichtelements und/oder Quellungen dieses Werkstoffs ausgeglichen werden. Der Ausgleich erfolgt dadurch, dass der ausgedehnte/ aufgequollene Werkstoff in den Hohlräumen aufgenommen wird und dadurch der Innendurchmesser des Dichtelements, insbesondere der Innendurchmesser der Dichtkante stets weitgehend konstant bleibt und praktisch nicht in den Innendurchmesser der Flansche hineinragt.

Flansche und Flanschdichtungen werden besonders häufig im "hygienischen Betrieb", also im Bereich Lebensmittel oder Pharmazie, gereinigt, wobei die Reinigung einer Armatur, in der die Flanschdichtung zur Anwendung gelangt, bei Temperaturen von etwa 130° C bis 160° C durchgeführt wird. Als Reinigungsmittel gelangen oftmals chemisch aggressive Reinigungsmittel zur Anwendung, die zu einer unerwünschten und technisch nicht auszuschließenden Quellung des gummielastischen Werkstoffes des Dichtelements führen können.

Dadurch, dass die temperaturbedingte Ausdehnung und/oder die Quellung zum Beispiel aufgrund chemisch aggressiver Reinigungsmittel durch die Hohlräume ausgeglichen wird, kann die Dichtungsanordnung durch Bürsten oder sogenannte Molche problemlos mechanisch gereinigt werden, ohne dass das Dichtelement beschädigt wird, zum Beispiel ohne dass die Dichtkante an den axial angrenzenden Begrenzungskanten der Flansche abgeschert wird.

Als "im Bereich der Dichtkante" wird im Sinne der Erfindung der Bereich verstanden, der die Gebrauchseigenschaften der Flanschdichtung unter den zuvor beschriebenen Bedingungen vorteilhaft beeinflussen kann. Der gummielastische Werkstoff im Bereich der Dichtkante zieht sich unter den zuvor beschriebenen Bedingungen in die Hohlräume zurück.

Gemäß einer vorteilhaften Ausgestaltung ist es vorgesehen, dass die Hohlräume in sich geschlossen ausgebildet sind. Hierbei ist von Vorteil, dass diese Hohlräume nach außen hermetisch abgeschlossen sind und deshalb, zum Beispiel durch abzudichtendes Medium nicht verunreinigt und dadurch in ihren Gebrauchseigenschaften nachteilig beeinflusst werden. Die Flanschdichtung weist folglich gleichbleibend gute Gebrauchseigenschaften während der gesamten Gebrauchsdauer auf.

Wie zuvor ausgeführt, sind die Hohlräume als Volumenausgleichs-Hohlräume ausgebildet, zur Aufnahme von gummielastischem Werkstoff des Dichtelements während der bestimmungsgemäßen Verwendung der Flanschdichtung durch thermische Ausdehnung und/oder Quellung des gummielastischen Werkstoffs.

Zusätzlich zu den zuvor beschriebenen Hohlräumen im Bereich der Dichtkante können weitere Hohlräume im Dichtelement angeordnet sein. Diese weiteren Hohlräume dienen dazu, dass sich der gummielastische Werkstoff, aus dem das Dichtelement besteht, in der gesamten Flanschdichtung weitgehend homogen ausdehnen kann und somit keine unerwünschten inneren Spannungen im gummielastischen Werkstoff auftreten.

Dazu kann es vorteilhaft vorgesehen sein, dass die Hohlräume und die weiteren Hohlräume im Wesentlichen gleichmäßig verteilt im Dichtelement angeordnet sind.

Die Dichtkante kann, in Strömungsrichtung des abzudichtenden Mediums im abzudichtenden Raum betrachtet, konkav ausgebildet sein. Sind die Hohlräume durch die temperaturbedingte Ausdehnung und/oder Quellung des gummielastischen Werkstoffs bereits ausgefüllt, kann sich die herstellungsbedingt zunächst noch konkav ausgebildete Dichtkante noch so lange in Richtung konvex ausdehnen, bis die Dichtkante bündig mit dem Innendurchmesser der Flansche abschließt.

Das Dichtelement kann aus einem EPDM-Werkstoff bestehen. Hierbei ist von Vorteil, dass ein solcher Werkstoff besonders kostengünstig und einfach zu verarbeiten ist. Als Werkstoffe können beispielsweise FKM, VMQ, NBR oder ACM zur Anwendung gelangen.
Würden nicht die erfindungsgemäßen Hohlräume zur Anwendung gelangen, wäre ein solcher EPDM-Werkstoff für Flanschdichtungen praktisch ungeeignet. Ein solcher Werkstoff reagiert auf unterschiedliche Temperaturen und/oder unterschiedliche abzudichtende Medien mit großen Änderungen in seiner Ausdehnung und/oder mit teilweise erheblicher Quellung. Nur dadurch, dass sich der Werkstoff in die Hohlräume zurückziehen kann, weist er ausreichende Standzeiten und ausreichend gute Gebrauchseigenschaften zur Abdichtung von Flanschen auf.

Der Stützkörper kann stirnseitig beiderseits axiale Endanschläge zur Begrenzung von auf die Flanschdichtung wirksamen Klemmkräften aufweisen, wobei der Stützkörper, mit Ausnahme der Endanschläge, vom gummielastischen Werkstoff des Dichtelements im Wesentlichen umschlossen ist. Die Flanschdichtung wird während ihrer Montage in axialer Richtung so lange geklemmt, bis die axialen Endanschläge von den Flanschen unmittelbar anliegend berührt werden. Hierbei ist von Vorteil, dass durch die Begrenzung der Klemmkräfte der gummielastische Werkstoff des Dichtelements keinen unerwünscht hohen mechanischen Belastungen ausgesetzt ist. Die Endanschläge haben also die Funktion einer Klemmkraftbegrenzung.

Der Stützkörper und das Dichtelement sind bevorzugt stoff- und/oder formschlüssig miteinander verbunden. Dies kann entweder durch chemische Bindung oder eine ausreichend gute Verkrallung erfolgen. Speziell im Hinblick auf eine gute formschlüssige Verbindung ist es zweckmäßig, dass der gummielastische Werkstoff des Dichtelements den Stützkörper nahezu vollständig umschließt, wie zuvor beschrieben.

Die Flanschdichtung ist bevorzugt außenumfangsseitig von dem vom gummielastischen Werkstoff ummantelten Stützkörper begrenzt. Durch die Anordnung des Stützkörpers nur im radial äußeren Bereich der Flanschdichtung kann das Dichtelement besonders gut an die jeweiligen Gegebenheiten des Anwendungsfalles angepasst werden.
Dadurch ergibt sich ein besseres Zusammenspiel von elastomerem Werkstoff und Stützkörper.
Radial innenseitig kann das Elastomer ungestört dichten, radial außenseitig kann der Stützkörper gut wirken und sichert das Elastomer vor zu starken Kräften.
Außerdem ist von Vorteil, dass die thermische Belastung radial außenseitig geringer ist und sich dadurch eine bessere Stützwirkung ergibt.

Die Dichtungsanordnung umfasst eine Flanschdichtung wie zuvor beschrieben und zwei Flansche, wobei die Flanschdichtung in axialer Richtung dichtend zwischen den Flanschen angeordnet ist und wobei die Flansche die Endanschläge unmittelbar anliegend berühren.

### Kurzbeschreibung der Zeichnung

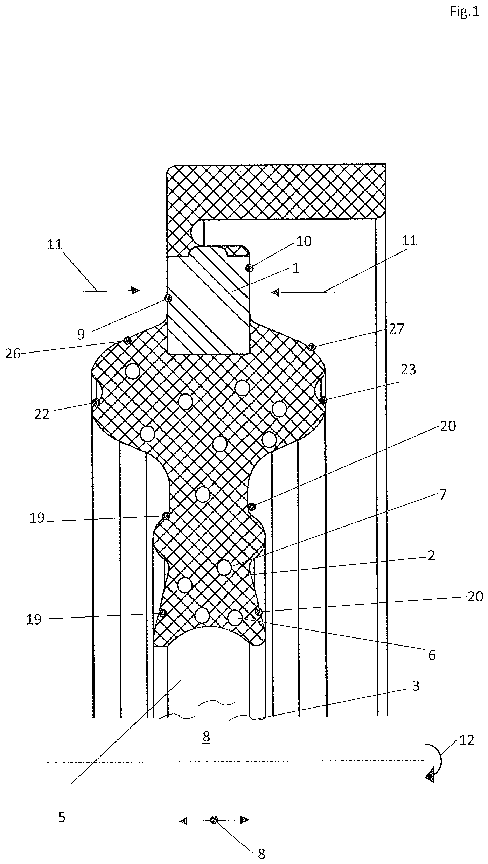

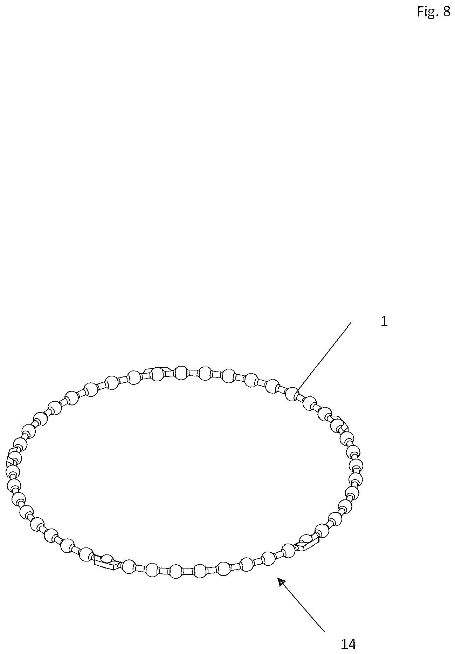

Die erfindungsgemäße Flanschdichtung und die erfindungsgemäße Dichtungsanordnung, die die erfindungsgemäße Flanschdichtung umfasst, sind in den Figuren 1 bis 13 in schematischer Darstellung gezeigt und werden nachfolgen näher beschrieben.

Die Figuren 1 bis 13 zeigen jeweils in schematischer Darstellung:
- Figur 1: ein Ausführungsbeispiel der erfindungsgemäßen Flanschdichtung,
- Figur 2: eine Dichtungsanordnung, die die Flanschdichtung aus Figur 1 umfasst,
- Figur 3: die Dichtungsanordnung aus Figur 2, an anderer Stelle geschnitten,
- Figur 4: zwei unterschiedliche Ausführungsbeispiele für Hohlräume, wobei in den Figuren 4.1.1 und 4.2.1 die Hohlräume im herstellungsbedingten Zustand gezeigt sind und
in den Figuren 4.1.2 und 4.2.2 im eingebauten Zustand bei Raumtemperatur und ohne Beaufschlagung mit einem aggressiven Medium und
in den Figuren 4.1.3 und 4.2.3 bei maximaler Belastung, das heißt bei Beaufschlagung mit hohen Temperaturen und einem aggressiven, abzudichtenden Medium,
- Figur 5: eine perspektivische Ansicht der Flanschdichtung aus Figur 1,
- Figur 6: den Stützkörper aus Figur 5 in perspektivischer Ansicht,
- Figur 7: ein zweites Ausführungsbeispiel eines Stützkörpers, ähnlich dem Stützkörper aus Figur 5,
- Figur 8: einen Stützkörper, der perlenkettenförmig ausgebildet ist,
- Figur 9: ein weiteres Ausführungsbeispiel eines Stützkörpers mit trapezförmigen Perlen,
- Figur 10: ein Ausführungsbeispiel der erfindungsgemäßen Flanschdichtung als Flanschdichtung,
- Figur 11: das Ausführungsbeispiel aus Figur 3 bei Raumtemperatur,
- Figur 12: das Ausführungsbeispiel aus Figur 3 bei 80° C,
- Figur 13: das Ausführungsbeispiel aus Figur 3 bei 160° C.

### Ausführung der Erfindung

In Figur 1 ist ein Ausführungsbeispiel einer Flanschdichtung gezeigt, die einen Stützkörper 1 aus einem zähharten Werkstoff umfasst. Das Dichtelement 2 besteht aus einem gummielastischen Werkstoff und ist mit dem Stützkörper 1 einstückig verbunden.
Radial innenseitig weist das Dichtelement 2 die Dichtkante 5 auf, die von abzudichtendem Medium 3 in einem abzudichtenden Raum 4 beaufschlagbar ist.

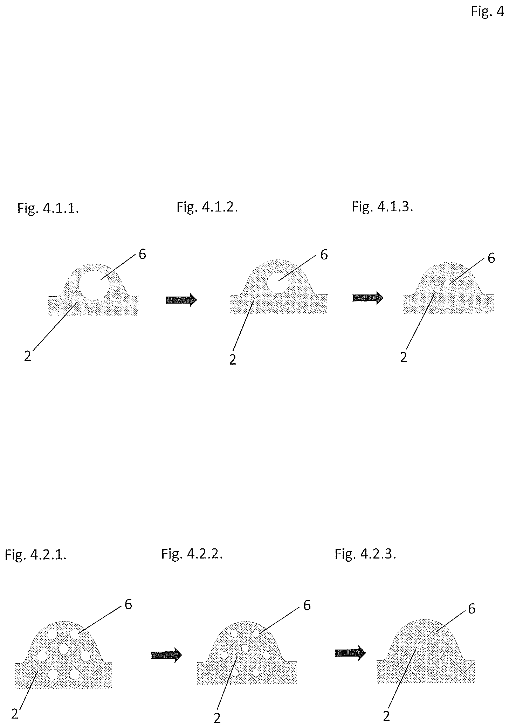

Erfindungswesentlich ist, dass das Dichtelement 2 im Bereich der Dichtkante 5 im herstellungsbedingten Zustand, wie hier dargestellt, Hohlräume 6 aufweist, die während der bestimmungsgemäßen Verwendung der Flanschdichtung volumenveränderlich sind.
In diesem Zusammenhang wird bereits jetzt auf Figur 4 hingewiesen, in der die volumenveränderlichen Hohlräume 6 gezeigt sind.

In dem hier gezeigten Ausführungsbeispiel sind die Hohlräume 6 in sich geschlossen ausgebildet, zusätzlich zu den Kerben 19, 20, die als offene Hohlräume bezeichnet werden können und in axialer Richtung 18 stirnseitig beiderseits des Dichtelements 2 angeordnet sind. Die hier gezeigten Hohlräume 6 sind als Volumenausgleichs-Hohlräume ausgebildet und zur Aufnahme von gummielastischem Werkstoff des Dichtelements 2 während der bestimmungsgemäßen Verwendung der Flanschdichtung durch thermische Ausdehnung und/oder Quellung des gummielastischen Werkstoffs vorgesehen. Neben den zuvor beschriebenen Hohlräumen 6 sind weitere Hohlräume 7 vorgesehen, die im Wesentlichen gleichmäßig verteilt im Dichtelement 2 angeordnet sind. Dadurch werden Spannungsspitzen innerhalb des erlastomeren Werkstoffs des Dichtelements 2 vermieden.

Die Dichtkante 5 ist, in Strömungsrichtung 8 des abzudichtenden Mediums 3 im abzudichtenden Raum 4 betrachtet, konkav ausgebildet.

Der Stützkörper 1 weist stirnseitig beiderseits axiale Endanschläge 9, 10 zur Begrenzung der auf die Flanschdichtung wirksamen Klemmkräfte 11 auf, wobei der Stützkörper 1, mit Ausnahme der Endanschläge 9, 10, vom gummielastischen Werkstoff des Dichtelements vollständig umschlossen ist. Der hier gezeigte Stützkörper 1 und das Dichtelement 2 sind stoff- und formschlüssig miteinander verbunden, und der Stützkörper 1 ist, in seiner Umfangsrichtung 12 betrachtet, wellenförmig 13 ausgebildet.

Das Dichtelement 2 weist radial außenseitig im Bereich des Stützkörper 1 stirnseitig beiderseits Wulste 26, 27 auf, in denen jeweils eine bevorzugt in Umfangsrichtung umlaufende Kerbe 22, 23 angeordnet ist. Bei axialer Verpressung der Flanschdichtung kann verdrängter elastomerer Werkstoff des Dichtelements 2 in diese Kerben 22, 23 ausweichen. Dadurch wird die Funktion der Hohlräume 6 und/oder der weiteren Hohlräume 7 unterstützt.

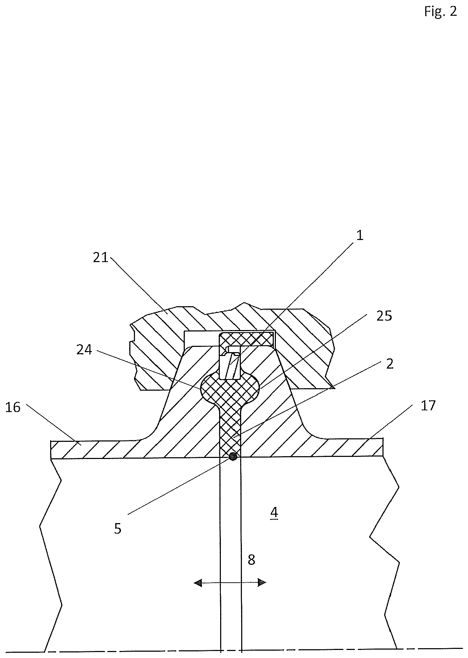

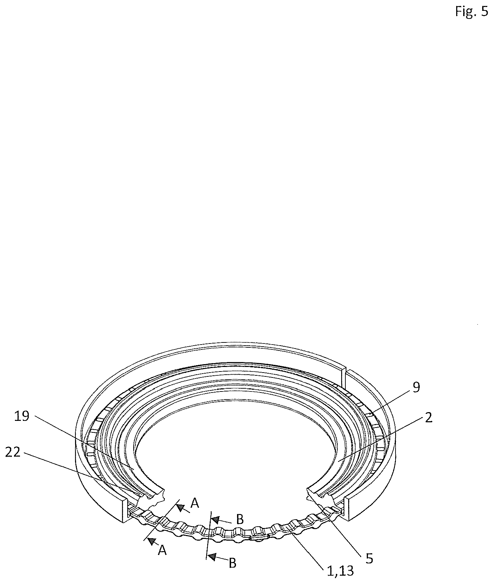

In Figur 2 ist die Flanschdichtung aus Figur 1 in einer Dichtungsanordnung eingebaut gezeigt. Die Flanschdichtung ist in axialer Richtung 18 zwischen den beiden Flanschen 16, 17 dichtend angeordnet, wobei die beiden Flansche 16, 17 von den Endanschlägen 9, 10 des Stützkörpers 1 anliegend berührt sind. Der Schnitt verläuft entlang der Linie A-A aus Figur 5.

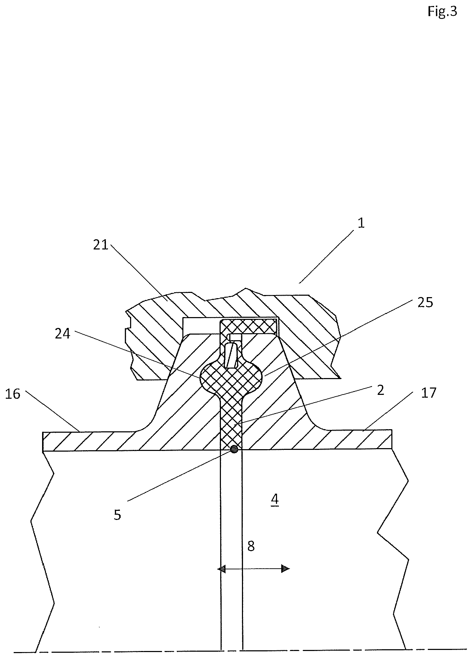

In Figur 3 ist die Dichtungsanordnung aus Figur 2, jedoch an anderer Stelle geschnitten, gezeigt. Geschnitten ist entlang der Linie B-B aus Figur 5. Hier ist zu erkennen, dass der Stützkörper 1 an dieser Stelle vom gummielastischen Werkstoff des Dichtelements vollständig umschlossen ist.

In den Figuren 2 und 3 ist eine Klemme 21 für die Flansche 16, 17 vorgesehen, die diese in axialer Richtung zusammen hält. Die Flansche 16, 17 umfassen Nuten 24, 25, in denen die Wulste 26, 27 während der bestimmungsgemäßen Verwendung der Dichtungsanordnung aufgenommen sind.

In Figur 4 sind unterschiedliche Belastungszustände des Dichtelements 2 im Bereich der Dichtkante 5 gezeigt.
Die Figuren 4.1.1 und 4.2.1 zeigen Hohlräume 6 im herstellungsbedingten Zustand.
In Figur 4.1.1 ist ein vergleichsweise großer Hohlraum gezeigt, in Figur 4.2.1 demgegenüber fünf kleinere Hohlräume.

In den Figuren 4.1.2 und 4.2.2 ist der gummielastische Werkstoff des Dichtelements 2 der Flanschdichtung im eingebauten Zustand gezeigt. Ein Teil des verdrängten Werkstoffs ist bereits in die nun kleineren Hohlräume 6 ausgewichen.

Der maximal belastete Zustand des Werkstoffs des Dichtelements 2 im Bereich der Dichtkante 5 ist in den Figuren 4.1.3 und 4.2.3 gezeigt. Ein Großteil des Werkstoffs ist in die Hohlräume 6, 7 ausgewichen, so dass die Hohlräume 6, 7 temperaturbedingt verdrängten oder mediumsbedingt aufgequollenen Werkstoff nun fast vollständig ausgefüllt sind.

Entscheidend ist, dass sich bei Temperaturbeaufschlagung und/oder Quellung der gummielastische Werkstoff des Dichtelements 2 in die Hohlräume 6, 7 verlagert, so dass das Dichtelement insbesondere im Bereich der Dichtkante 5 in allen Belastungszuständen im Wesentlichen dieselbe Form behält. Ein unerwünschtes Extrudieren des Werkstoffs aus dem Dichtspalt zwischen den beiden Flanschen 16, 17 in den rohrförmigen Querschnitt, der durch die Flansche 16, 17 begrenzt ist, findet nicht statt.

In Figur 5 ist die Flanschdichtung aus Figur 1 in perspektivischer Ansicht gezeigt, wobei zur besseren Übersichtlichkeit ein Teil des Stützkörpers 1 freigelegt ist.

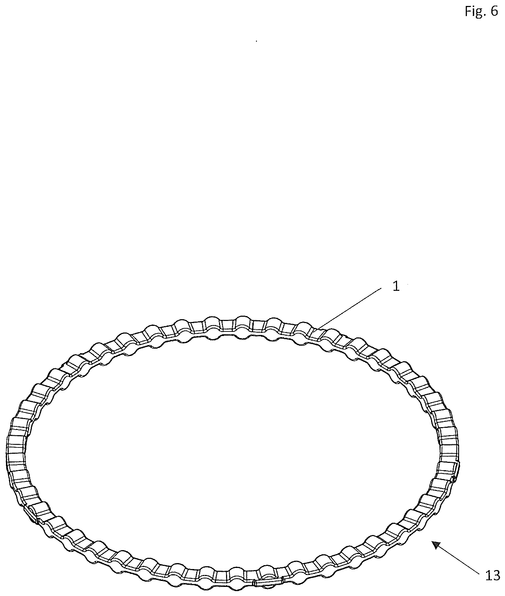

In Figur 6 ist der Stützkörper 1 aus Figur 5 als Einzelteil gezeigt. Der Stützkörper 1 ist, in Umfangsrichtung 12 betrachtet, wellenförmig 13 ausgebildet.

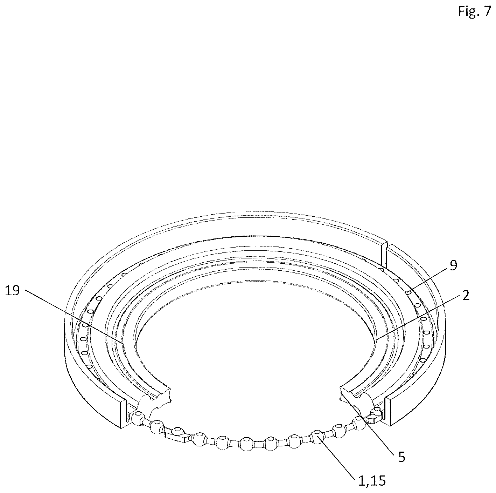

In Figur 7 ist eine Flanschdichtung gezeigt, ähnlich der Flanschdichtung aus Figur 5. Die einzige Abweichung besteht darin, dass der Stützkörper 1 abweichend ausgebildet ist. Der Stützkörper 1 ist, in Umfangsrichtung 12 betrachtet, perlenkettenförmig 14 ausgebildet, wobei die Perlen 15 des perlenkettenförmigen Stützkörpers 1, 14, im Querschnitt betrachtet, kreisförmig ausgebildet sind. Die Perlen 15 weisen abgeplattete Endanschläge 9, 10 auf.

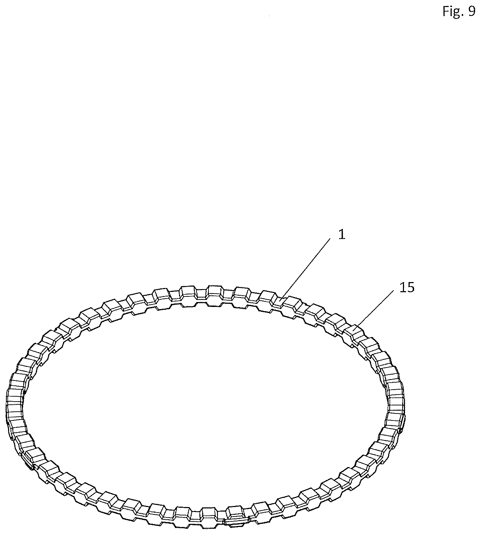

In Figur 9 ist ein weiterer Stützkörper gezeigt, wobei der Stützkörper aus Figur 9 trapezförmig ausgebildete Perlen 15 aufweist. Diese Form ermöglicht eine Aufnahme von sehr hohen Klemmkräften 11.

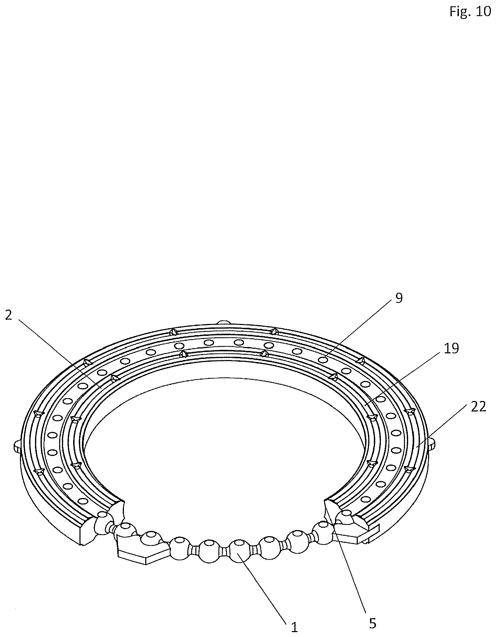

In Figur 10 ist eine Flanschdichtung gezeigt ähnlich der Flanschdichtung aus Figur 5, wobei die in Figur 10 gezeigte Flanschdichtung als Flachdichtung ausgebildet ist. Die Flachdichtung hat, im Gegensatz zur Flanschdichtung aus Figur 1, keine Wulste, und die zur Anwendung gelangenden Flansche entsprechend keine Nuten, wie sie in den Figuren 2 und 3 gezeigt sind.

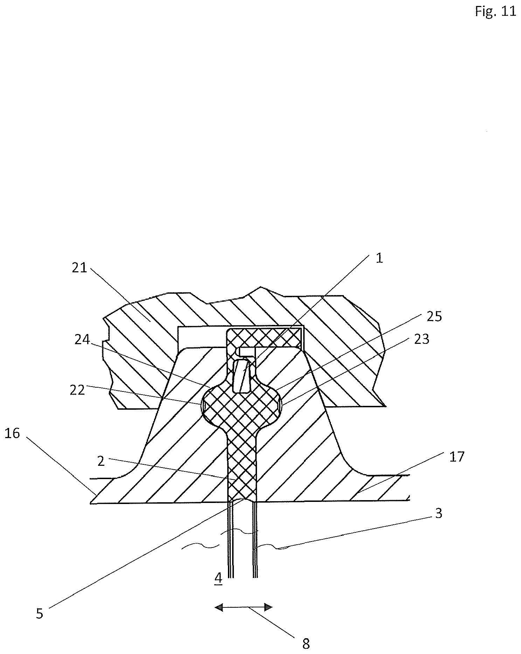

In den Figuren 11 bis 13 ist die Dichtungsanordnung aus den Figuren 2 und 3 in unterschiedlichen Betriebszuständen gezeigt.

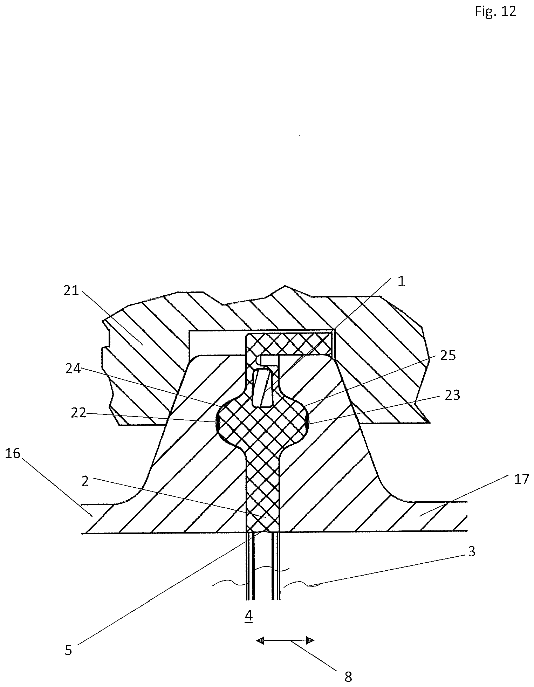

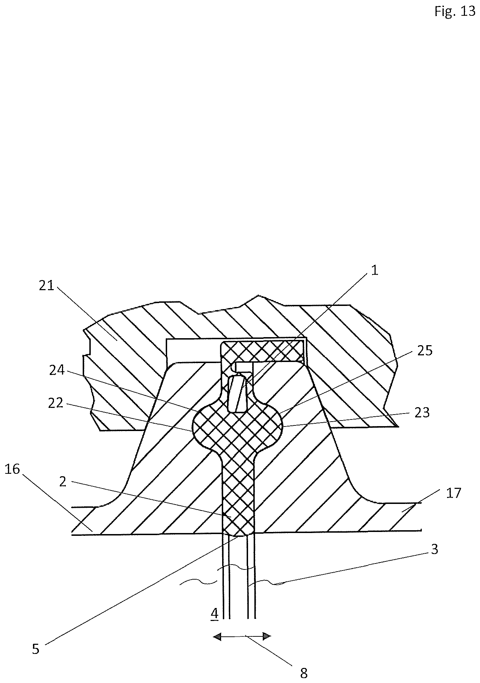

In Figur 11 ist die Dichtungsanordnung bei Raumtemperatur zu sehen, in Figur 12 bei 80° C und in Figur 13 bei 160° C. Es ist gut zu erkennen, dass die unterschiedlichen Temperaturbeaufschlagungen und/oder die Beaufschlagung des gummielastischen Werkstoffs des Dichtelements 2 mit aggressiven Medien 3 nahezu keinen Einfluss auf die Gestalt der Dichtkante 5 des Dichtelements 2 haben, weil sich der ausgedehnte und/oder aufgequollene gummielastische Werkstoff des Dichtelements in die Hohlräume 6, 7 zurückzieht.

## Patentansprüche

1. Flanschdichtung, umfassend einen Stützkörper (1) aus einem zähharten Werkstoff und ein Dichtelement (2) aus einem gummielastischen Werkstoff, die einstückig miteinander verbunden sind, wobei das Dichtelement (2) eine von einem abzudichtenden Medium (3) in einem abzudichtenden Raum (4) beaufschlagbare Dichtkante (5) aufweist, wobei das Dichtelement (2) im Bereich der Dichtkante (5) im herstellungsbedingten Zustand Hohlräume (6) aufweist, die während der bestimmungsgemäßen Verwendung der Flanschdichtung volumenveränderlich sind, **dadurch gekennzeichnet, dass** der Stützkörper (1), in seiner Umfangsrichtung (12) betrachtet, perlenkettenförmig (14) ausgebildet ist und dass die Perlen (15) des perlenkettenförmigen Stützkörpers (1, 14), im Querschnitt betrachtet, kreisförmig ausgebildet sind.

2. Flanschdichtung nach Anspruch 1, **dadurch gekennzeichnet, dass** die Hohlräume (6) in sich geschlossen ausgebildet sind.

3. Flanschdichtung nach einem der Ansprüche 1 oder 2, **dadurch gekennzeichnet, dass** die Hohlräume (6) als Volumenausgleichs-Hohlräume ausgebildet sind, zur Aufnahme von gummielastischem Werkstoff des Dichtelements (2) während der bestimmungsgemäßen Verwendung der Flanschdichtung durch thermische Ausdehnung und/oder Quellung des gummielastischen Werkstoffs.

4. Flanschdichtung nach einem der Ansprüche 1 bis 3, **dadurch gekennzeichnet, dass** zusätzlich zu den Hohlräumen (6) weitere Hohlräume (7) im Dichtelement (2) angeordnet sind.

5. Flanschdichtung nach einem der Ansprüche 1 bis 4, **dadurch gekennzeichnet, dass** die Hohlräume (6) und die weiteren Hohlräume (7) im Wesentlichen gleichmäßig verteilt im Dichtelement (2) angeordnet sind.

6. Flanschdichtung nach einem der Ansprüche 1 bis 5, **dadurch gekennzeichnet, dass** die Dichtkante (5), in Strömungsrichtung (8) des abzudichtenden Mediums (3) im abzudichtenden Raum (4) betrachtet, konkav ausgebildet ist.

7. Flanschdichtung nach einem der Ansprüche 1 bis 6, **dadurch gekennzeichnet, dass** das Dichtelement (2) aus einem EPDM-Werkstoff besteht.

8. Flanschdichtung nach einem der Ansprüche 1 bis 7, **dadurch gekennzeichnet, dass** der Stützkörper (1) stirnseitig beiderseits axiale Endanschläge (9, 10) zur Begrenzung der auf die Flanschdichtung wirksamen Klemmkräfte (11) aufweist und dass der Stützkörper (1), mit Ausnahme der Endanschläge (9, 10), vom gummielastischen Werkstoff des Dichtelements (2) vollständig umschlossen ist.

9. Flanschdichtung nach einem der Ansprüche 1 bis 8, **dadurch gekennzeichnet, dass** der Stützkörper (1) und das Dichtelement (2) stoff- und/oder formschlüssig miteinander verbunden sind.

10. Dichtungsanordnung, umfassend eine Flanschdichtung nach einem der Ansprüche 1 bis 9, und zwei Flansche (16, 17), wobei die Flanschdichtung in axialer Richtung (18) dichtend zwischen den Flanschen (16, 17) angeordnet ist und dass die Flansche (16, 17) die Endanschläge (9, 10) unmittelbar anliegend berühren.

## Claims

1. Flange seal comprising a support body (1) composed of a tough-hard material and a sealing element (2) composed of a rubber-elastic material, which are connected integrally to one another, wherein the sealing element (2) has a sealing edge (5) which is able to be acted on by a medium (3) to be sealed in a space (4) to be sealed, wherein, in the state following production, the sealing element (2) has in the region of the sealing edge (5) hollow spaces (6) which, during the intended use of the flange seal, are variable in volume, **characterized in that** the support body (1), as seen in the circumferential direction (12) thereof, is formed in the shape of a pearl necklace (14), and **in that** the pearls (15) of the pearl necklace-like support body (1, 14), as seen in cross section, are of circular form.

2. Flange seal according to Claim 1, **characterized in that** the hollow spaces (6) are of self-contained form.

3. Flange seal according to either of Claims 1 or 2, **characterized in that** the hollow spaces (6) are formed as volume compensation hollow spaces for receiving rubber-elastic material of the sealing element (2) during the intended use of the flange seal by way of thermal expansion and/or swelling of the rubber-elastic material.

4. Flange seal according to one of Claims 1 to 3, **characterized in that**, in addition to the hollow spaces (6), further hollow spaces (7) are arranged in the sealing element (2).

5. Flange seal according to one of Claims 1 to 4, **characterized in that** the hollow spaces (6) and the further hollow spaces (7) are arranged so as to be substantially uniformly distributed in the sealing element (2).

6. Flange seal according to one of Claims 1 to 5, **characterized in that**, as seen in the flow direction (8) of the medium (3) to be sealed in the space (4) to be sealed, the sealing edge (5) is of concave form.

7. Flange seal according to one of Claims 1 to 6, **characterized in that** the sealing element (2) consists of an EPDM material.

8. Flange seal according to one of Claims 1 to 7, **characterized in that** the support body (1) has on the face side on both sides axial end stops (9, 10) for limiting the clamping forces (11) which act on the flange seal, and **in that** the support body (1), with the exception of the end stops (9, 10), is completely surrounded by the rubber-elastic material of the sealing element (2).

9. Flange seal according to one of Claims 1 to 8, **characterized in that** the support body (1) and the sealing element (2) are connected to one another in a materially bonded and/or form-fitting manner.

10. Seal arrangement comprising a flange seal according to one of Claims 1 to 9 and two flanges (16, 17), wherein the flange seal is arranged sealingly between the flanges (16, 17) in an axial direction (18), and in that the flanges (16, 17) are in contact with the end stops (9, 10) in a directly abutting manner.

## Revendications

1. Garniture d'étanchéité à bride, comprenant un corps support (1) composé d'un matériau dur et résistant et d'un élément d'étanchéité (2) en un matériau élastique en caoutchouc, l'élément d'étanchéité (2) possédant un bord d'étanchéité (5) qui peut être sollicité par un fluide (3) pour lequel réaliser l'étanchéité dans un espace (4) à rendre étanche, l'élément d'étanchéité (2) possédant dans la zone du bord d'étanchéité (5) des espaces vides (6) dans l'état lié à la fabrication, dont le volume peut varier pendant l'utilisation de la garniture d'étanchéité à bride conformément à sa destination, **caractérisée** en ce le corps support (1), vu dans le sens de son pourtour (12), est réalisé en forme d'une chaîne de perles (14) et en ce que les perles (15) du corps support en forme de chaîne de perles (1, 14), vues en section transversale, sont de configuration circulaire.

2. Garniture d'étanchéité à bride selon la revendication 1, **caractérisée en ce que** les espaces vides (6) sont configurés fermés sur eux-mêmes.

3. Garniture d'étanchéité à bride selon l'une des revendications 1 ou 2, **caractérisée en ce que** les espaces vides (6) sont réalisés sous la forme d'espaces vides à compensation de volume, en vue d'accueillir le matériau élastique en caoutchouc de l'élément d'étanchéité (2) pendant l'utilisation conforme à sa destination de la garniture d'étanchéité à bride par dilatation thermique et/ou gonflement du matériau élastique en caoutchouc.

4. Garniture d'étanchéité à bride selon l'une des revendications 1 à 3, **caractérisée en ce que** des espaces vides supplémentaires (7) sont disposés dans l'élément d'étanchéité (2) en plus des espaces vides (6).

5. Garniture d'étanchéité à bride selon l'une des revendications 1 à 4, **caractérisée en ce que** les espaces vides (6) et les espaces vides supplémentaires (7) sont disposés en étant distribués sensiblement uniformément dans l'élément d'étanchéité (2).

6. Garniture d'étanchéité à bride selon l'une des revendications 1 à 5, **caractérisée en ce que** le bord d'étanchéité (5), vu dans le sens de l'écoulement (8) du fluide (3) pour lequel réaliser l'étanchéité dans l'espace (4) à rendre étanche, est de configuration concave.

7. Garniture d'étanchéité à bride selon l'une des revendications 1 à 6, **caractérisée en ce que** l'élément d'étanchéité (2) se compose d'un matériau EPDM.

8. Garniture d'étanchéité à bride selon l'une des revendications 1 à 7, **caractérisée en ce que** le corps support (1) possède du côté frontal, des deux côtés, des butées d'extrémité (9, 10) axiales destinés à limiter les forces de serrage (11) agissant sur la garniture d'étanchéité à bride, et **en ce que** le corps support (1) est entièrement entouré par le matériau élastique en caoutchouc de l'élément d'étanchéité (2), à l'exception des butées d'extrémité (9, 10).

9. Garniture d'étanchéité à bride selon l'une des revendications 1 à 8, **caractérisée en ce que** le corps support (1) et l'élément d'étanchéité (2) sont reliés entre eux par fusion de matières et/ou complémentarité de formes.

10. Arrangement de garniture d'étanchéité comprenant une garniture d'étanchéité à bride selon l'une des revendications 1 à 9 et deux brides (16, 17), la garniture d'étanchéité à bride étant disposée entre les brides (16, 17) en réalisant l'étanchéité dans la direction axiale (18), et en ce que les brides (16, 17) sont en contact avec les butées d'extrémité (9, 10) en étant appliquées directement contre celles-ci.
